# EUROPÄISCHE PATENTSCHRIFT

(11) **EP 2 427 520 B1**
(45) Veröffentlichungstag und Bekanntmachung des Hinweises auf die Patenterteilung: **06.11.2013**
(21) Anmeldenummer: 10725377.5
(22) Anmeldetag: 06.05.2010
(51) Int. Cl.: C09C 1/44, C09C 1/46, C09C 1/48, C01B 31/02, C01B 31/04, C09C 1/58, C09C 3/04

(54) **GRANULATZUSAMMENSETZUNG UND VERFAHREN ZU DEREN HERSTELLUNG**
GRANULATE COMPOSITION AND METHOD FOR PRODUCING THE SAME
COMPOSITION DE GRANULÉS ET SON PROCÉDÉ DE PRODUCTION

(30) Priorität: 06.05.2009 DE 102009019846
(43) Veröffentlichungstag der Anmeldung: 14.03.2012
(73) Patentinhaber: H.C. Carbon GmbH, 90461 Nürnberg (DE)
(72) Erfinder: HANDL, Werner, 90518 Altdorf (DE)
(74) Vertreter: Stippl, Hubert
(86) Internationale Anmeldenummer: PCT/EP2010/002781
(87) Internationale Veröffentlichungsnummer: WO 2010/127853

(56) Entgegenhaltungen:
- EP-A1- 1 529 819
- EP-A2- 1 146 090
- US-A1- 2003 195 274

## Beschreibung

Kohlenstoffformen wie Graphite, Kohlenstoffnanomaterialien wie Kohlenstoff-Nanotubes und Ruße gelten als besonders schwer zu dispergieren. Diese Dispergierprobleme führen bei den diversen Anwendungen zu erheblichen Schwierigkeiten. So lassen sich z. B. Ruße in wässrige oder lösemittelhaltige Systeme nur mit großen Scherkräften, wie sie in Perl- und Kugelmühlen herrschen, einigermaßen agglomeratfrei dispergieren. Teilweise werden auch Walzwerke, so genannte Walzenstühle, eingesetzt. Die schwierige Dispergierbarkeit gilt gleichermaßen für Graphite, die aufgrund ihrer Plättchenstruktur feste Agglomerate bilden, als auch für Kohlenstofffasern, Kohlenstoff-Nanotubes, Kohlenstoff und Nanofasern. Die beiden letztgenannten Kohlenstoffformen sind aufgrund ihrer verknäuelten Faserstruktur besonders schwer zu dispergieren.

Neben den Dispergierproblemen in flüssigen Medien gibt es ebenfalls Schwierigkeiten bei Thermoplasten, Duroplasten, Harzsystemen sowie Elastomeren. Zur Prädispergierung werden Spezialextruder, wie gleichlaufende Zweiwellenextruder oder Planetwalzenextruder eingesetzt. Meist haben diese Extruder spezielle Wellengeometrien (Schneckengeometrien), um in der Polymerschmelze ausreichende Scherkräfte zur Dispergierung aufzubauen. Danach wird die Schmelze nach bekannten Methoden granuliert. Diese prädispergierte Form wird handelsüblich als Compound oder Masterbatch bezeichnet. Bei Elastomeren wie Gummi- oder Kautschukmischungen wird die Dispergierung in Knetern bzw. Innenmischern unter großen Scherkräften durchgeführt. Die zur Dispergierung der Kohlenstoffe nötigen Scherkräfte sind so groß, dass meist auch eine Schädigung des Polymers erfolgt.

Der Verarbeiter dieser Kohlenstoffformen hat zusätzlich auch das Problem der Staubbildung und der schlechten Dosier- und Förderbarkeit. Es ist bekannt, dass die genannten Kohlenstoffformen sehr schlecht oder überhaupt nicht rieselfähig sind und deshalb sowohl bei der Sack-, Big bag- und Siloentleerung, in den Förderleitungen als auch bei den Vibrations- oder Schneckendosierem Blockaden- oder Brückenbildung verursachen.

Die Kohlenstoffe wie Graphit, Ruß und CNT's ("Carbon Nanotubes") werden meist zur Verbesserung der mechanischen Eigenschaften oder zur Erzielung einer elektrischen und/oder thermischen Leitfähigkeit sowie zur Verbesserung tribologischer Eigenschaften eingesetzt. Die genannten Kohlenstoffe, speziell die Graphite, werden aber auch zur Ausbildung von Barriereschichten zur Reduzierung der Permeation bzw. Diffusion verwendet.

### Stand der Technik

Zur Verbesserung der beschriebenen Problematik wurden zahlreiche Verfahren vorgeschlagen.

In der WO 2004/096922 wird beispielsweise ein Pigmentkonzentrat für die Betoneinfärbung mit Netz- und Dispergiermitteln vorgeschlagen, welches zur besseren und sofortigen Dispergierung ein so genanntes Desintegrationsmittel enthält. Letzteres dient dazu, das Pigmentkonzentrat bei Wasserkontakt zu sprengen. Diese, in der Pharmaindustrie als Tablettensprengmittel lange bekannten Substanzen, meist Zellulosepulver, quellen bei Wasserkontakt und sprengen die Tablette bzw. hier das Granulat zur besseren Dispergierung. Nachteilig bei diesem Prozess ist die relativ hohe Dosierung und die Unverträglichkeit bzw. Unwirksamkeit in nicht wässrigen Systemen.

Die WO 2006/117117 beschreibt ein Verfahren zur Herstellung eines hexagonalen Bomitrid-Granulats durch Sprühtrocknung, Aufbau- oder Wirbelschichtgranulation. Dabei wird vorgeschlagen, als Additive Metallphosphate, Metallsilikate, Tone, Montmorillonite sowie Tenside und Zelluloseäther zu verwenden. Die nach dieser Lehre erhaltenen Granulate mögen für die Keramik geeignet sein, sind jedoch in organischen Medien nicht dispergierbar.

EP 0 807 669 schlägt ein Agglomerationsverfahren für Ruße mit mechanischer Verdichtung durch Walzenkompaktoren, Matrizenpressen und Extruder vor. Die Russ-Granulate werden hergestellt, indem die pulverförmigen Ruße unter Zugabe eines Befeuchtungsmittels und gegebenenfalls eines Bindemittels sowie weiterer Additive in einem Mischer unter Vermischen gleichmässig durchfeuchtet und anschliessend die durchfeuchtete Mischung mit einer Ringmatrizenpresse verdichtet werden. Die in den vorgeschlagenen Verdichtungsgeräten erzeugten Drücke sind extrem groß und verdichten die Partikel derart stark, dass eine Dispergierung zu Einzelpartikel nicht mehr möglich ist.

In der EP 1 529 819 werden Rußgranulate vorgeschlagen, welche einen Triester des Sorbitans enthalten. Es wird auch vorgeschlagen, die Granulierung in einem Ringschichtmischgranulator, einer Perlmaschine oder einer Perltrommel durchzuführen. Triester des Sorbitans sind zwar mit einer Vielzahl von organischen Medien wie Öle und Fette verträglich, doch zeigt diese Produktgruppe nur eine geringe Wirkung bei plättchenförmigen oder faserförmigen Kohlenstoffen wie Graphit oder Carbon Nanotubes.

Ein Träger für Additive und/oder Pigmente und/oder Farbstoffe für Polymere, insbesondere für thermoplastische Polymere wird in EP 1 609 889 vorgeschlagen. Dabei soll ein Naturöl und/oder ein epoxidiertes Naturöl und/oder eine Fettsäure und/oder ein Fettsäureester und als zweite Komponente ein Tensid bzw. ein Emulgator enthalten sein. Nachteilig ist hierbei, dass kein Granulat, sondern lediglich ein Flüssigkonzentrat entsteht. Die nach dieser Lehre hergestellten Produkte enthalten Additivgehalte von >10% und sind somit lediglich zur Einfärbung von Polymeren, nicht aber zu deren Eigenschaftsänderung geeignet.

In der DE 100 032 48 werden Pigmentgranulate zur Einfärbung unpolarer Medien beschrieben. Dabei werden Pigmente, insbesondere Eisenoxide und/oder Ruße mit Wachsmischungen und mindestens einem Dispergator granuliert. Bei den Wachsmischungen wird dabei Polyethylenwachs und Styrol-Acrylat-Wachs als Granulierhilfe verwendet. Nach diesem Verfahren können zwar Granulate mit einer Verträglichkeit in unpolaren Medien erzeugt werden, doch ist die Dispergierung nicht völlig möglich. Die nach dieser Lehre eingesetzten Dispergatoren sind nämlich nur in polaren Medien wirksam. In unpolaren Medien sind die vorgeschlagenen Dispergatoren wie Ligninsulfonat eher störend.

Der bekannte Stand der Technik offenbart fast ausschließlich Granulate oder Konzentrate zur Einfärbung. Die dabei zugrunde liegenden Pigmente sind organische oder anorganische Pigmente wie Eisenoxide oder Ruße. Die Teilchenstruktur derartiger Pigmente ist meist kugelig oder unregelmäßig geformt, aber nicht lamelar bzw. plättchenförmig oder faserförmig aufgebaut. Es ist bekannt, dass gerade plättchen- und faserförmige Stoffe außerordentlich schwer zu dispergieren sind. Dies gilt umso mehr, wenn das Volumen dieser Stoffe durch Verdichtung reduziert werden muss. Da jegliche Form der Granulierung eine Verdichtung darstellt, ist diese Aufgabe gleichsam einer Quadratur des Kreises.

Nach dem bekannten Stand der Technik werden mit den vorgeschlagenen Verfahren keine ausreichenden Dispergiergrade erreicht, so dass zur Erzielung der gewünschten Eigenschaften die Kohlenstoffe überdosiert werden mussten. Beispielsweise können nur die dispergierten Teilchen (Primärteilchen) ein optimales Netzwerk aufbauen und dadurch bei kleinstmöglicher Konzentration die für die elektrische Leitfähigkeit nötige Perkolation bilden. Dies gilt auch für die Ausbildung eines Netzwerkes zur Verbesserung der mechanischen Eigenschaften. Nicht dispergierte Teilchen welche weiterhin als Agglomerate vorliegen, können kein optimales Netzwerk ausbilden, da eben gerade die nötigen "freien" Teilchen gebunden sind. Dieser Mangel wurde bisher durch die Überdosierung der Kohlenstoffe Graphit, Ruß oder CNT's ausgeglichen.

US 2003/195274 A1 offenbart eine Dispersion von oberflächenmodifizierten Rußpigmenten unter Verwendung eines oberflächenaktiven Tensids aus der Gruppe der acetylenischen Glykole. Das oberflächenaktive Tensid wird in einer Konzentration von 0,5 bis 5 Gew. -%, bezogen auf die Gesamtdispersion, die weitere Additive enthält, eingesetzt. Die Dispersion der Rußpartikel wird in der Weise hergestellt, dass eine Lösung des Tensids mit den Pigmenten in Kontakt gebracht wird.

Aus EP 1 146 090 A2 ist ein Prozess zur Herstellung von Dispersionen bekannt, welche Rußpartikel mit einem Durchmesser von 100 nm sowie Additiven wie oberflächenaktive Tenside aus der Gruppe der acetylenischen Glykole enthalten. Das oberflächenaktive Tensid wird in einer Konzentration von 1 bis 2 Gew.-%, bezogen auf die Masse der eingesetzten Partikel, zugegeben.

Aufgabe der Erfindung ist es, eine neuartige Granulatzusammensetzung bereitzustellen, bei der Partikel von Kohlenstoffstrukturen, auch wenn sie plättchen- oder faserförmig sind, zu leicht dispergierbaren und rieselfähigen Granulaten geformt werden können. Weiterhin ist es Aufgabe der Erfindung, ein Verfahren zur Herstellung einer entsprechenden Granulatzusammensetzung zur Verfügung zu stellen.

### Beschreibung der Erfindung

Die vorstehende Aufgabe wird durch die gesamte Lehre des Anspruchs 1 gelöst. Vorteilhafte Ausgestaltungen der Erfindung ergeben sich aus den Unteransprüchen 2 bis 9. Ein vorteilhaftes Verfahren zur Herstellung einer Granulatzusammensetzung geht aus den Ansprüchen 10 bis 14 hervor. Anspruch 15 stellt ein Kunststoffmaterial unter Verwendung einer erfindungsgemäßen Granulatzusammensetzung unter Schutz.

Gemäß der Erfindung ist die Granulatzusammensetzung umfassend oder zumindest beinhaltend Partikel von Kohlenstoffstrukturen, insbesondere von Graphit, Ruß und/oder kohlenstoffhaltige Nanopartikel, insbesondere sogenannte Nanoröhren oder ein Gemisch davon mit einem Additiv in Form eines Tensids aus der Gruppe der acetylenischen Glykole versehen, wobei die Partikel oder mindestens ein Teil der in der Granulatzusammensetzung vorhandenen Partikel plättchen- oder faserförmige Struktur aufweist. Es hat sich überraschenderweise gezeigt, dass unter Verwendung der acetylenischen Glykole sich eine vorteilhafte Benetzung der Partikel ergibt, die die Agglomerationsneigung herabsetzt sowie die Öffnungswilligkeit, also die Entknäuelung von entsprechend faserförmigen Partikeln in vorteilhafter Weise beeinflusst. Als Lösungsmittel für das Additiv kommen unterschiedlichste Flüssigkeiten in Frage, insbesondere auch Wasser. Demzufolge kann das Granulat auch in herkömmlichen Sprühtrocknungs-Einrichtungen hergestellt werden.

Besonders vorteilhaft haben sich hierbei als Additiv acetylenische Diole, insbesondere acetylenische Diole mit einer Kohlenstoff-Kohlenstoff-Dreifachbindung herausgestellt. Derartige acetylenische Diole sind dazu in der Lage, auf die Oberfläche des jeweiligen Partikels aufzuziehen, vergleichbar mit einer Beschichtung oder einer Avivage. Dies gilt sogar bei plättchenförmigen, faserförmigen Partikeln einschließlich sogenannter Nanoröhren. Besonders vorteilhaft ist, dass die Molekülgröße der acetylenischen Diole so groß ist, dass die als Avivage wirkende Benetzung gleichsam als Abstandshalter der Partikel untereinander wirkt. Auf diese Weise werden in vorteilhafter Weise kritische Annäherungen, die zu Agglomeraten führen, verhindert. Daraus resultiert, dass bei der Weiterverarbeitung zu weiterführenden Gemischen die Granulatzusammensetzung bei Kontakt mit einer Flüssigkeit, z.B. Wasser, gut dispergiert und es zu keinen Agglomeraten kommt. Hierdurch wiederum kann eine reduzierte Menge an Partikeln im Vergleich zu bisher anwendungsbedingt zum Einsatz kommen, da die Agglomerationsneigung erheblich reduziert werden kann.

Das Additiv weist zweckmäßigerweise eine hydrophobe-hydrophile-hydrophobe Molekülstruktur auf. Daraus resultiert der Vorteil, dass das Additiv nicht nur gute Benetzungseigenschaften besitzt, sondern auch eine lipophile Affinität zeigt.

Acetylenische Diole, insbesondere mit einer Kohlenstoff-Kohlenstoff-Dreifachbindung in der Mitte sowie einer Hauptkette mit einer n-Kohlenstoffkette, wobei n ≥ 6, vorzugsweise n ≥ 8, besonders vorzugsweise n ≥ 10 ist, stellt eine besonders wirksame Form eines Additivs mit der vorgenannten Molekülstruktur dar, bei der die vorerwähnten Gruppen einen Bereich hoher Elektronendichte aufweisen, die das Molekül polar macht. Ferner ist eine symmetrische, stark verzweigte Gruppe auf jeder Seite des vorerwähnten Bereichs vorhanden, die das Molekül mit zwei hydrophoben Bereichen ausstattet. Insgesamt weist dieses Molekül somit die vorerwähnte hydrophobe-hydrophile-hydrophobe Struktur auf. Aufgrund dessen hat dieses Additiv nicht nur gute Benetzungseigenschaften, sondern zeigt auch eine lipophile Affinität.

Vorzugsweise handelt es sich bei dem Additiv um ein acetylenisches Diol mit der nachstehenden Strukturformel oder einen auf diese Strukturformel aufbauenden Komplex: 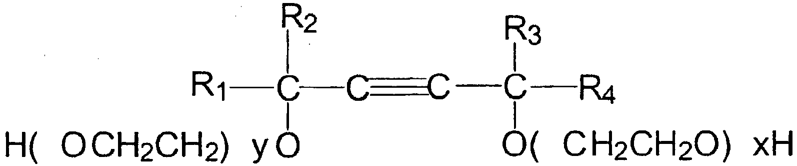 wobei R1 und R4 Alkylreste sind, die 3 bis 10 Kohlenstoffatome enthalten, R2 und R3 aus der Gruppe ausgewählt sind, die Methyl und Ethyl umfasst, x und y eine Summe im Bereich von 0 bis 60 aufweisen.

Besonders vorteilhaft ist ein acetylenisches Diol mit der nachstehenden Strukturformel oder einen auf diese Strukturformel aufbauenden Komplex: 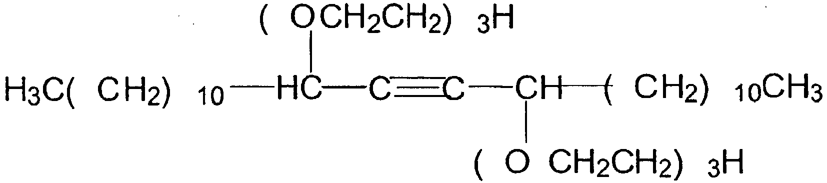 wobei die Summe von x und y gleich 0 ist.

Das Additiv liegt zweckmäßigerweise in einer Konzentration vor, bei der sich eine Oberflächenspannung von höchstens 30 mN/m, vorzugsweise höchstens 25 mN/m, vorzugsweise höchstens 20 mN/m ergibt.

Von Vorteil hierfür ist es, wenn das Additiv, bezogen auf das Gewicht der getrockneten Granulatzusammensetzung, in einer Konzentration von 0,2 Gew.-% bis 10 Gew.-%, vorzugsweise 1 Gew.-% bis 5 Gew.-% vorliegt. Beispielsweise werden bei einer Konzentration von 0,2 Gew.-% stabile Reibungsverhältnisse erreicht sowie eine Oberflächenspannung von etwa 25 mN/m begründet, so dass Flüssigkeit in feinste kapillare Bereiche der Partikelanhäufungen bzw. Faserbündel dringen und letztere benetzen. Die Molekülgröße des Additivs ist dabei so groß, dass die Moleküle desselben gleichsam als Abstandshalter wirken und es infolgedessen nicht mehr zu einer kritischen Annäherung kommen kann.

Die Erfindung ermöglicht es auch, noch weitere, zusätzliche Additive, wie z.B. zusätzliche Benetzungsmittel und/oder Dispergiermittel und/oder Mittel zur Beeinflussung des Sedimentationsverhaltens einzusetzen.

Gemäß der Erfindung ist es vorteilhaft, wenn das Granulat eine mittlere Korngröße im Bereich von 0,05 mm bis 5 mm, vorzugsweise 0,1 mm bis 3 mm, besonders vorzugsweise 0,5 mm bis 1 mm aufweist.

Die Partikel sind aufgrund der Auswahl des Additivs und dessen Eigenschaften vollständig oder zumindest zum Großteil mit letzterem bedeckt, d.h. benetzt. Die Partikel können mit einer Mikroschicht des Additivs vollständig oder zumindest zum Großteil bedeckt sein.

Die erfindungsgemäße Granulatzusammensetzung umfasst Partikel insgesamt oder als Teil der Granulatzusammensetzung mit plättchen- oder faserförmiger Struktur.

Das erfindungsgemäße Verfahren zur Herstellung einer Granulatzusammensetzung, welche mindestens eines der oben genannten Merkmale aufweist, ist gekennzeichnet durch folgende Schritte:
(a) Bereitstellen eines Additivs nach mindestens einem der vorhergehenden Ansprüche,
(b) Herstellung einer Lösung des Additivs unter Verwendung eines Lösungsmittels.
(c) Inkontaktbringen der Lösung des Additivs mit den Partikeln von Kohlenstoffstrukturen, insbesondere von Graphit, Ruß und/oder kohlenstoffhaltigen Nanopartikeln, insbesondere sogenannten Nanoröhren oder einem Gemisch davon, wobei die Partikel oder mindestens ein Teil der in der Granulatzusammensetzung vorhandenen Partikel plättchen- oder faserförmige Struktur aufweist.
(d) Trocknung.

Die zu behandelnden bzw. zu granulierenden Kohlenstoffe werden durch dieses Verfahren schnell und vollständig benetzt. Die Additive bewirken, dass bei der Benetzung die Oberflächenspannung der Flüssigkeit geringer ist als die Oberflächenenergie der Kohlenstoffpartikel. Das Verfahren kann man mit einer Beschichtung oder Avivage gleichsetzen.

Mittels des Verfahrens kann eine Suspension aus der Lösung des Additivs mit den Partikeln von Kohlenstoffstrukturen, insbesondere von Graphit, Ruß und/oder kohlenstoffhaltigen Nanopartikeln, insbesondere sogenannten Nanoröhren, oder einem Gemisch davon hergestellt werden. In der Suspension können die Kohlenstoffstrukturen in idealer Weise mit den Additiven schnell und vollständig benetzt werden. Außerdem ermöglicht es die Suspension, die benetzten Kohlenstoffstrukturen im Anschluss wieder leicht von der Lösung zu trennen und Granalien in der gewünschten Form und Struktur herzustellen.

In vorteilhafter Weise kann es sich bei dem Lösungsmittel um Wasser, vorzugsweise um entmineralisiertes Wasser, handeln. Dadurch kann das Granulat zum Beispiel in herkömmlichen Sprühtrocknungseinrichtungen hergestellt werden oder in anderen üblichen Einrichtungen (z. B. Granulationstrommel) getrocknet werden. Wasser als Lösungsmittel zeichnet sich unter anderem aufgrund seiner ökologischen Unbedenklichkeit in vorteilhafter Weise aus.

Die Suspension kann durch Zerstäubung getrocknet werden, wobei gleichzeitig das Granulat in der gewünschten mittleren Korngröße hergestellt werden kann. Mittels des Trocknens durch Zerstäubung können sich auch andere physikalischen Eigenschaften der Granalien wie äußere Form und innere Struktur einstellen lassen.

Vorzugsweise liegt die Konzentration des Additivs in Bezug auf die Menge des Lösungsmittels in einem Bereich von 0,5 Gew.-% bis 5 Gew.-%, vorzugsweise von 1 Gew.-% bis 3 Gew.-%. Aufgrund der extremen Affinität der Additive zu Kohlenstoffstrukturen und die dadurch erzielte Ummantelung der gesamten Oberfläche sind die genannten geringen Konzentrationsmengen des Additivs ausreichend.

Bevor die Partikel (Graphitpulver) mit der Lösung des Additivs in Kontakt gebracht werden, können sie eine mittlere Korngröße im Bereich von 500 µm bis 0,1 µm, vorzugsweise 100 µm bis 0,5 µm, besonders vorzugsweise 20 µm bis 0,8 µm, aufweisen. Die Partikel in derart kleinen Teilchengrößen werden mittels des erfindungsgemäßen Verfahrens vollständig mit dem Additiv umhüllt, so dass sie auch später im Einsatz wieder in die genannte mittlere Korngröße zerfallen können.

Die Partikel können nach der Trocknung eine mittlere Korngröße im Bereich von 0,05 mm bis 5 mm, vorzugsweise 0,1 mm bis 3 mm, besonders vorzugsweise 0,5 mm bis 1 mm aufweisen. Dadurch erhalten die Partikel bzw. Granulate eine gute Rieselfertigkeit und sind für den Einsatz in der Kunststoffverarbeitung besonders geeignet.

Gemäß der Erfindung wird auch ein Kunststoffmaterial, insbesondere Kunststoffgranulat zur Anwendung in einem Kunststoffverformungsverfahren, insbesondere in Spritzgussverfahren, Extrusionsverfahren, Extrusionsblasverfahren und dergleichen unter Schutz gestellt, welches eine Granulatzusammensetzung enthält, welche mindestens eine der oben genannten Merkmale aufweist. Durch die in dem Kunststoffmaterial gleichmäßig und fein verteilten Kohlenstoffstrukturen können sich die gewünschten Eigenschaften, insbesondere die physikalischen, mechanischen und/oder tribologischen Eigenschaften, in idealer Weise ausbilden. Eine nachteilige Überdosierung dagegen liegt nicht vor.

Bei den aceytylenischen Diolen handelt es sich vorzugsweise um ethoxylierte aceytylenische Diole, wie z. B. die Dynol^{®} 604- und Surfynol^{®} 400-Reihen, erhältlich von Air Products. Dynol^{®} 604 wird bevorzugt, weil es bessere Gleitfähigkeit bereitstellt und eine bessere Substantivität zu Kohlenstoff hat. Das acetylenische Diol wird in Form einer Lösung, beispielsweise einer wässerigen Lösung, verwendet, die mindestens 0,01 Gew.-% bis zu 10 Gew.-%, vorzugsweise bis zu 5 Gew.-% acetylenische Diole enthält. Beispielsweise kann eine wässrige Lösung mit 2 Gew.-% acetylenischer Diole verwendet werden. Die acetylenischen Diole können in einem Gemisch oder einer Kombination verwendet werden.

Es hat sich überraschend gezeigt, dass die acetylenischen Diole eine extreme Affinität zu Graphit und insbesondere zu CNT's haben und dort auf die Oberfläche aufziehen. Diesen Vorgang kann man mit einer Beschichtung oder Avivage gleichsetzen.

Die Öffnungswilligkeit, also die Entknäuelung von Carbon Nanotubes wird unter anderem durch Faser/Faser-Gleitreibung beeinflusst. Beim Einsatz acetylenischer Diole wurde eine Beeinflussung der Faser/Faser-Gleitreibung festgestellt. Bei den gewählten Produkten erreicht man beispielsweise bei einer Konzentration von 0,2 % stabile Reibungsverhältnisse, die so niedrig liegen, dass eine leichte Entknäuelung möglich wird. Bei dieser Konzentration wird bereits eine Oberflächenspannung von ca. 25 dyn/cm erreicht und die Flüssigkeit kann in die feinsten kapillaren Bereiche der Faserbündel dringen und die Fasern benetzten.

Die Molekülgröße der acetylenischen Diole ist dabei groß genug dass die als Avivage wirkende Benetzung gleichsam als Abstandshalter fungiert. Auf diese Weise können kritische Annäherungen welche wieder zu Agglomeraten führen würde, verhindert werden. Dies trifft auch auf die plättchenförmigen Graphite zu. Dieser Umstand ist insofern von Bedeutung, da bei der späteren Dispergierung der Granulate eine Beweglichkeit der Primärteilchen gegeben ist und eine erneute Agglomerierung auftreten würde. Dies wird nun durch die Abstandshalter, auch Spacer Moleküle genannt, verhindert.

Selbstverständlich können den erfindungsgemäßen Kohlenstoffgranulaten auch andere Additive zugesetzt werden. Die Auswahl der Additive richtet sich dabei nach den vorgesehenen Verwendungszwecken. Auch Mischungen verschiedener Produkte sind möglich.

### Ausführungsbeispiele

### Beispiel 1

In einem Behälter mit Rührwerk (Dissolverscheibe) werden 700 Liter entmineralisiertes Wasser vorgelegt und darin 5,00 kg ethoxyliertes aceytylenisches Diol gelöst. Anschließend werden 295 kg Pulvergraphit mit einem Kohlenstoffgehalt von 99,5 % und einer mittleren Teilchengröße von 4 µm eingemischt und ca. 5 Minuten gerührt.

Die so erhaltene Suspension wird im Sprühturm durch Zentrifugalradzerstäuber, Zweistoffdüse, Druckdüse oder Ultraschall zerstäubt. Die erzeugten Tropfen haben eine definierte Größenverteilung und eine große Stoffaustauschoberfläche, über die im intensiven Kontakt mit dem Trocknungsgas (Luft oder Inertgas, 150...600 °C) die Verdampfung des Lösungsmittels erfolgt. Abhängig vom Feststoffgehalt der Suspension und der Art der Dispergierflüssigkeit sowie von Zerstäubungsvariante und Bindersystem bilden sich Granalien unterschiedlicher äußerer Form und innerer Struktur (Hohlkorn oder Vollkorn), deren Eigenschaften durch Verteilungsfunktionen beschrieben werden können.

### Beispiel 2

In einem Rührbehälter werden gemäß Beispiel 1 650 Liter entmineralisiertes Wasser vorgelegt und 2,50 kg ethoxyliertes aceytylenisches Diol und 2,50 kg Polyvinylpyrrolidon mit einem K-Wert von 27-33, gelöst. Anschließend werden 345 kg Graphitpulver mit einem Kohlenstoffgehalt von 98 % und einer mittleren Teilchengröße von 2 µm eingemischt und ca. 5 Minuten gerührt. Die Suspension wird anschließend mit einer Einstoffdüse airless in einen auf 250°C beheizten Sprühturm eingesprüht. Das durch diese Trocknung erhaltene Granulat hat eine durchschnittliche Korngröße von 0,5 mm.

### Beispiel 3

Graphitpulver mit einem Kohlenstoffgehalt von 99,0 % und einer mittleren Teilchengröße von 8 µm wird mittels einer gravimetrischen Pulverdosierung einem beheizten Ringschicht-Mischgranulator (RMG) kontinuierlich zugeführt. Über einen Zugabestutzen, der 12 cm von der Mitte des Graphiteinfüllstutzens entfernt ist, wird eine 2 %ige wässrige Lösung eines ethoxylierten aceytylenischen Diols mittels Zweistoffzerstäubung mit Luft eingedüst. Das aus dem Ringschicht-Mischgranulator ausgetragene, zum Teil granulierte Produkt wird zur Abrundung der Granulate und zur weiteren Verminderung des Feinstanteils in einer Granulationstrommel nachgeperlt und getrocknet.

### Beispiel 4

In einen beheizten Ringschicht-Mischgranulator (RMG) werden gem. Beispiel 3 mittels einer gravimetrischen Pulverdosierung kontinuierlich Multiwall Carbon-Nanotubes (CNT) zugeführt. Über den Zugabestutzen wird eine 2 %ige wässrige Lösung eines ethoxylierten aceytylenischen Diols mittels Zweistoffzerstäubung mit Luft eingedüst. Das aus dem Ringschicht-Mischgranulator ausgetragene Produkt zeigt eine gute Granulierung mit einer Granulatgröße von 0,1-0,8 mm und ist nach der Trocknung gebrauchsfertig.

### Beispiel 5

In einem Rührbehälter welcher mit einem Rotor-/Statorrührer (Ultra Turrax^{®}) ausgerüstet ist, werden 600 Liter entmineralisiertes Wasser vorgelegt und darin 3,00 kg ethoxyliertes aceytylenisches Diol gelöst. Anschließend werden 100 kg Carbon Black (Printex^{®} L6 Leitruß der Fa. Evonik) und 297 kg Graphitpulver mit einem Kohlenstoffgehalt von 99,9 % und einer mittleren Teilchengröße von 4 µm unter stetigem Rühren zugesetzt. Die Suspension wird für 10 Minuten bei voller Drehzahl des Rührers dispergiert. Die Mischung wird anschließend airless mittels Wirbeldüsen in einem beheizten Sprühturm bei einer Temperatur von 250°C versprüht. Das erhaltene Granulat weist eine Korngröße von 0,2-0,6 mm auf.

## Patentansprüche

1. Granulatzusammensetzung umfassend oder zumindest beinhaltend Partikel von Kohlenstoffstrukturen, insbesondere von Graphit, Ruß und/oder kohlenstoffhaltige Nanopartikel, insbesondere sogenannte Nanoröhren, oder ein Gemisch davon,
**dadurch gekennzeichnet, dass**
diese mit einem Additiv in Form eines Tensids aus der Gruppe der acetylenischen Glykole versehen ist, wobei die Partikel oder mindestens ein Teil der in der Granulatzusammensetzung vorhandenen Partikel plättchen- oder faserförmige Struktur aufweist.

2. Granulatzusammensetzung nach Anspruch 1,
**dadurch gekennzeichnet, dass**
es sich bei dem Tensid um acetylenische Diole handelt.

3. Granulatzusammensetzung nach Anspruch 2,
**dadurch gekennzeichnet, dass**
es sich bei dem acetylenischen Diol um ein acetylenisches, tertiäres Glykol handelt.

4. Granulatzusammensetzung nach Anspruch 2 oder 3,
**dadurch gekennzeichnet, dass**
es sich bei dem Diol um Ethylenoxidaddukte von acetylenischen Glykolen, insbesondere acetylenisch tertiären Glykolen handelt.

5. Granulatzusammensetzung nach den Ansprüchen 2 bis 4,
**dadurch gekennzeichnet, dass**
als Hauptkette eine n-Kohlenstoffkette vorgesehen ist, wobei n ≥ 6, vorzugsweise n ≥ 8, besonders vorzugsweise n ≥ 10 ist.

6. Granulatzusammensetzung nach Anspruch 2 bis 5,
**dadurch gekennzeichnet, dass**
es sich um ein acetylenisches Diol mit der nachstehenden Strukturformel oder einen auf diese Strukturformel aufbauenden Komplex handelt: 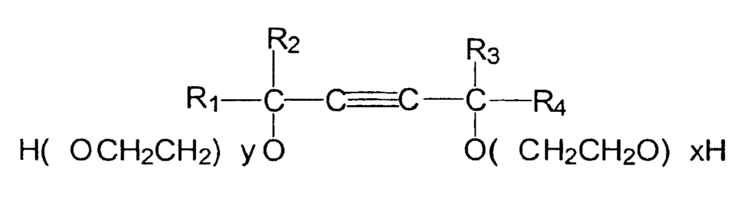 wobei
R1 und R4 Alkylreste sind, die 3 bis 10 Kohlenstoffatome enthalten,
R2 und R3 aus der Gruppe ausgewählt sind, die Methyl und Ethyl umfasst, x und y eine Summe im Bereich von 0 bis 60 aufweisen.

7. Granulatzusammensetzung nach mindestens einem der vorhergehenden Ansprüche,
**dadurch gekennzeichnet, dass**
das Additiv in einer Konzentration vorliegt, bei der sich eine Oberflächenspannung von höchstens 30 mN/m, vorzugsweise höchstens 25 mN/m, vorzugsweise höchstens 20 mN/m ergibt.

8. Granulatzusammensetzung nach mindestens einem der vorhergehenden Ansprüche,
**dadurch gekennzeichnet, dass**
das Additiv, bezogen auf das Gewicht der getrockneten Granulatzusammensetzung, in einer Konzentration von 0,2 Gew.-% bis 10 Gew.-%, vorzugsweise 1 Gew.-% bis 5 Gew.-% vorliegt.

9. Granulatzusammensetzung nach mindestens einem der vorhergehenden Ansprüche,
**dadurch gekennzeichnet, dass**
das Granulat eine mittlere Korngröße im Bereich von 0,05 mm bis 5 mm, vorzugsweise 0,1 mm bis 3 mm, besonders vorzugsweise 0,5 mm bis 1 mm aufweist.

10. Verfahren zur Herstellung einer Granulatzusammensetzung gemäß einem der vorhergehenden Ansprüche,
**gekennzeichnet durch folgende Schritte:**
(a) Bereitstellen eines Additivs nach mindestens einem der vorhergehenden Ansprüche,
(b) Herstellung einer Lösung des Additivs unter Verwendung eines Lösungsmittels,
(c) Inkontaktbringen der Lösung des Additivs mit den Partikeln von Kohlenstoffstrukturen, insbesondere von Graphit, Ruß und/oder kohlenstoffhaltigen Nanopartikeln, insbesondere sogenannten Nanoröhren oder einem Gemisch davon, wobei die Partikel oder mindestens ein Teil der in der Granulatzusammensetzung vorhandenen Partikel plättchen- oder faserförmige Struktur aufweist.
(d) Trocknung.

11. Verfahren nach Anspruch 10,
**dadurch gekennzeichnet, dass**
die Suspension durch Zerstäubung getrocknet wird.

12. Verfahren nach einem der Ansprüche 10 bis 11,
**dadurch gekennzeichnet, dass**
die Konzentration des Additivs in Bezug auf die Menge des Lösungsmittels in einem Bereich von 0,5 Gew.-% bis 5 Gew.-%, vorzugsweise von 1 Gew.-% bis 3 Gew.-% liegt.

13. Verfahren nach einem der Ansprüche 10 bis 12,
**dadurch gekennzeichnet, dass**
die Partikel, bevor sie mit der Lösung des Additivs in Kontakt gebracht werden, eine mittlere Korngröße im Bereich von 500 µm bis 0,1 µm, vorzugsweise 100 µm bis 0,5 µm, besonders vorzugsweise 20 µm bis 0,8 µm aufweisen.

14. Verfahren nach einem der Ansprüche 10 bis 13,
**dadurch gekennzeichnet, dass**
die Partikel nach der Trocknung eine mittlere Korngröße im Bereich von 0,05 mm bis 5 mm, vorzugsweise 0,1 mm bis 3 mm, besonders vorzugsweise 0,5 mm bis 1 mm aufweist.

15. Kunststoffmaterial, insbesondere Kunststoffgranulat zur Anwendung in einem Kunststoffverformungsverfahren, insbesondere im Spritzgussverfahren, Extrusionsverfahren, Extrusionsblasverfahren,
**dadurch gekennzeichnet, dass**
eine Granulatzusammensetzung gemäß einem der Ansprüche 1 bis 14 enthält.

## Claims

1. Granulate composition comprising or at least including particles of carbon structures, in particular of graphite, carbon black and/or carbon-containing nanoparticles, in particular what are known as nanotubes, or a mixture thereof, **characterized in that** this has been provided with an additive in the form of a surfactant from the group of the acetylenic glycols, where the structure of the particles or of at least some of the particles present in the granulate composition is lamellar or fibrous.

2. Granulate composition according to Claim 1, **characterized in that** the surfactant involves acetylenic diols.

3. Granulate composition according to Claim 2, **characterized in that** the acetylenic diol involves an acetylenic tertiary glycol.

4. Granulate composition according to Claim 2 or 3, **characterized in that** the diol involves ethylene oxide adducts of acetylenic glycols, in particular acetylenic tertiary glycols.

5. Granulate composition according to Claims 2 to 4, **characterized in that** an n-carbon chain has been provided as main chain, where n ≥ 6, preferably n ≥ 8, particularly preferably n ≥ 10.

6. Granulate composition according to any of Claims 2 to 5, **characterized in that** it involves an acetylenic diol with the structural formula below or a complex based on the said structural formula: 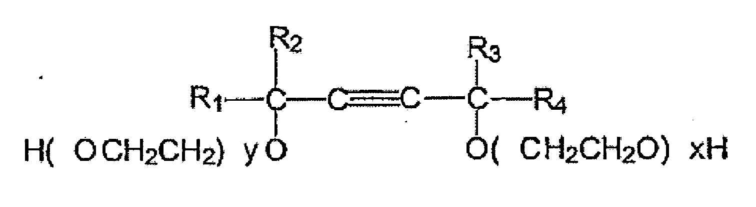 where R1 and R4 are alkyl moieties which comprise from 3 to 10 carbon atoms, R2 and R3 are selected from the group that comprises methyl and ethyl, and the total of x and y is in the range from 0 to 60.

7. Granulate composition according to at least one of the preceding claims, **characterized in that** the concentration present of the additive is such as to give a surface tension of at most 30 mN/m, preferably at most 25 mN/m, preferably at most 20 mN/m.

8. Granulate composition according to at least one of the preceding claims, **characterized in that** the concentration present of the additive, based on the weight of the dried granulate composition, is from 0.2% by weight to 10% by weight, preferably from 1% by weight to 5% by weight.

9. Granulate composition according to at least one of the preceding claims, **characterized in that** the average grain size of the granulate is in the range from 0.05 mm to 5 mm, preferably from 0.1 mm to 3 mm, particularly preferably from 0.5 mm to 1 mm.

10. Process for the production of a granulate composition according to any of the preceding claims, **characterized by** the following steps:
(a) provision of an additive according to at least one of the preceding claims,
(b) production of a solution of the additive with use of a solvent,
(c) bringing the solution of the additive into contact with the particles of carbon structures, in particular of graphite, carbon black and/or carbon-containing nanoparticles, in particular what are known as nanotubes or a mixture thereof, where the structure of the particles or at least some of the particles present in the granulate composition is lamellar or fibrous, and
(d) drying.

11. Process according to Claim 10, **characterized in that** the suspension is dried by atomization.

12. Process according to either of Claims 10 to 11, **characterized in that** the concentration of the additive, based on the amount of the solvent, is in the range from 0.5% by weight to 5% by weight, preferably from 1% by weight to 3% by weight.

13. Process according to any of Claims 10 to 12, **characterized in that** the average grain size of the particles before they are brought into contact with the solution of the additive is in the range from 500 µm to 0.1 µm, preferably from 100 µm to 0.5 µm, particularly preferably from 20 µm to 0.8 µm.

14. Process according to any of Claims 10 to 13, **characterized in that** the average grain size of the particles after drying is in the range from 0.05 mm to 5 mm, preferably from 0.1 mm to 3 mm, particularly preferably from 0.5 mm to 1 mm.

15. Plastics material, in particular plastics granulate for use in a forming process for plastics, in particular in the injection-moulding process, extrusion process, or extrusion-blow-moulding process, **characterized in that** it comprises a granulate composition according to any of Claims 1 to 14.

## Revendications

1. Composition de granulat, comprenant ou comportant au moins des particules de structures carbonées, en particulier de graphite, de suie et/ou de nanoparticules contenant du carbone, en particulier ce qu'on appelle des nanotubes, ou un mélange de celles-ci, **caractérisé en ce qu'**elle est pourvue d'un additif sous forme d'un agent tensioactif du groupe des glycols acétyléniques, les particules ou au moins une partie des particules présentes dans la composition de granulat présentant une structure en forme de plaquettes ou de fibres.

2. Composition de granulat selon la revendication 1, **caractérisée en ce qu'**il s'agit, pour l'agent tensioactif, de diols acétyléniques.

3. Composition de granulat selon la revendication 2, **caractérisée en ce qu'**il s'agit, pour le diol acétylénique, d'un glycol acétylénique, tertiaire.

4. Composition de granulat selon la revendication 2 ou 3, **caractérisée en ce qu'**il s'agit, pour le diol, de produits d'addition d'oxyde d'éthylène sur des glycols acétyléniques, en particulier de glycols acétyléniques tertiaires.

5. Composition de granulat selon les revendications 2 à 4, **caractérisée en ce que** la chaîne principale est une chaîne n-carbonée, n étant ≥ 6, de préférence n étant ≥ 8, de manière particulièrement préférée n étant 10.

6. Composition de granulat selon la revendication 2 à 5, **caractérisée en ce qu'**il s'agit d'un diol acétylénique présentant la formule de structure ci-dessous ou d'un complexe basé sur cette formule de structure 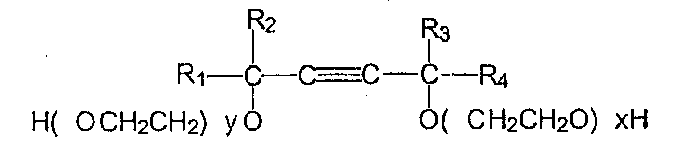 où
R₁ et R₄ représentent des radicaux alkyle qui contiennent 3 à 10 atomes de carbone,
R₂ et R₃ sont choisis dans le groupe comprenant méthyle et éthyle,
x et y présentant une somme dans la plage de 0 à 60.

7. Composition de granulat selon au moins l'une quelconque des revendications précédentes, **caractérisée en ce que** l'additif se trouve en une concentration à laquelle on obtient une tension superficielle d'au plus 30 mN/m, de préférence d'au plus 25 mN/m, de préférence d'au plus 20 mN/m.

8. Composition de granulat selon au moins l'une quelconque des revendications précédentes, **caractérisée en ce que** l'additif, par rapport au poids de la composition de granulat séchée, se trouve en une concentration de 0,2% en poids à 10% en poids, de préférence de 1% en poids à 5% en poids.

9. Composition de granulat selon au moins l'une quelconque des revendications précédentes, **caractérisée en ce que** le granulat présente une grosseur moyenne de particule dans la plage de 0,05 mm à 5 mm, de préférence de 0,1 mm à 3 mm, de manière particulièrement préférée de 0,5 mm à 1 mm.

10. Procédé pour la préparation d'une composition de granulat selon l'une quelconque des revendications précédentes, **caractérisé par** les étapes suivantes :
(a) mise à disposition d'un additif selon au moins l'une quelconque des revendications susmentionnées,
(b) préparation d'une solution de l'additif en utilisant un solvant,
(c) mise en contact de la solution de l'additif avec les particules de structures carbonées, en particulier de graphite, de suie et/ou de nanoparticules contenant du carbone, en particulier ce qu'on appelle des nanotubes, ou un mélange de celles-ci, les particules ou au moins une partie des particules présentes dans la composition de granulat présentant une structure en forme de plaquettes ou de fibres,
(d) séchage.

11. Procédé selon la revendication 10, **caractérisé en ce que** la suspension est séchée par vaporisation.

12. Procédé selon l'une quelconque des revendications 10 à 11, **caractérisé en ce que** la concentration en additif se trouve, par rapport à la quantité du solvant, dans une plage de 0,5% en poids à 5% en poids, de préférence de 1% en poids à 3% en poids.

13. Procédé selon l'une quelconque des revendications 10 à 12, **caractérisé en ce que** les particules, avant qu'elles ne soient mises en contact avec la solution de l'additif, présentent une grosseur moyenne de particule dans la plage de 500 µm à 0,1 µm, de préférence de 100 µm à 0,5 µm, de manière particulièrement préférée de 20 µm à 0,8 µm.

14. Procédé selon l'une quelconque des revendications 10 à 13, **caractérisé en ce que** les particules présentent, après le séchage, une grosseur moyenne de particule dans la plage de 0,05 mm à 5 mm, de préférence de 0,1 mm à 3 mm, de manière particulièrement préférée de 0,5 mm à 1 mm.

15. Matériau synthétique, en particulier granulat en matériau synthétique, destiné à une utilisation dans un procédé de façonnage de matériaux synthétiques, en particulier dans un procédé de moulage par injection, un procédé d'extrusion, un procédé d'extrusion-soufflage, **caractérisé en ce qu'**il contient une composition de granulat selon l'une quelconque des revendications 1 à 14.
